# DEMANDE DE BREVET EUROPEEN

(11) **EP 4 071 038 A1**
(43) Date de publication de la demande: **12.10.2022**
(21) Numéro de dépôt: 22166155.6
(22) Date de dépôt: 31.03.2022
(51) Int. Cl.: B62J 11/00, B62K 27/12, B62K 13/02, B62H 5/06, B60D 1/155

(54) **DISPOSITIF DE FIXATION D'ACCESSOIRES SUR UN CYCLE**

(30) Priorité: 06.04.2021 FR 2103518
(71) Demandeur: Olympique Sarl, 42610 Saint-Romain-le-Puy (FR)
(72) Inventeur: CARRON, Florian, 42000 SAINT-ETIENNE (FR)
(74) Mandataire: Cabinet Laurent & Charras

(57) **Abrégé**

L'invention concerne un dispositif de fixation (1) d'accessoires pour cycle (3) comprenant un cadre (3a) et une douille de direction (3b), le dispositif comprenant un boîtier (10) ouvert comprenant un fond (11) se prolongeant de part et d'autre par deux faces opposées (12), l'ensemble formant un U ;
- le dispositif comprenant des premiers moyens de serrage destinés à rapprocher les faces opposées l'une de l'autre ;
- le boîtier étant configuré pour être monté sur le cycle et pincer entre ses faces opposées la douille de direction ainsi qu'une portion du cadre ;
- le boîtier comprenant des moyens de fixation (13) d'un accessoire pour cycle.

Selon l'invention, le dispositif comprend une garniture (20) disposée à l'intérieur du boîtier et configurée pour venir en contact de toute ou partie avec la partie de la douille de direction et la portion du cadre du cycle en regard de la garniture lors du serrage des premiers moyens de serrage.

## Description

### Domaine technique

L'invention se rapporte au domaine technique des cycles, et en particulier de la fixation d'accessoires sur un cycle.

### Art antérieur

Il est connu de l'art antérieur des accessoires pour cycles, tels que des barres de traction, permettant de relier de façon amovible un cycle d'enfant à un cycle d'adulte. Ces barres de traction permettent à un adulte de guider un enfant débutant lorsqu'il roule dans des zones pouvant être dangereuses, telles qu'en ville. Lorsque l'adulte et l'enfant arrivent dans une zone sécurisée, telle qu'une piste cyclable, il est possible de décrocher le cycle tracté afin que l'enfant, apprenant, évolue seul.

Afin de laisser l'adulte choisir la trajectoire de roulage, la roue avant du cycle enfant est surélevée et ne touche pas le sol. Le cycle enfant est donc contraint de suivre le cycle adulte.

Pour aider l'enfant à maintenir son équilibre, le guidon de son cycle est toutefois maintenu par un dispositif d'anti-rotation, qui bloque la direction de son cycle.

Le document FR2808492 décrit une barre de traction de ce type. Cependant cette barre de traction présente plusieurs inconvénients : le blocage de la direction n'est pas garanti, attendu que la section constante de la mâchoire retenant le cycle enfant semble incompatible avec le changement de section intervenant entre la douille de direction et la potence du cycle.

Ce problème est mis en exergue lorsqu'il s'agit de monter cette barre de traction sur différents cycles enfant : ceux-ci peuvent présenter différentes constructions du cadre, ou encore des diamètres de douilles de direction qui soient différents les uns des autres, et auxquels la mâchoire de FR2808492 ne peut pas s'adapter.

En outre le serrage de la mâchoire par le biais d'une goupille est un serrage latéral en un seul point, qui laisse à penser que la douille de direction est en mesure de bouger au moins dans le sens longitudinal de la mâchoire.

Au surplus, le contact direct du matériau métallique de la mâchoire sur le cycle enfant est amené à détériorer le cycle enfant, notamment en le rayant.

Le document DE102018120294 décrit une autre barre de traction destinée à atteler un cycle enfant derrière un cycle adulte. En pratique, la mâchoire présente deux orifices en forme de boutonnière destinés à recevoir deux ergots présents sur le cycle enfant. Ce système impose donc de rajouter lesdits ergots sur le cycle enfant, de sorte que cette barre de traction n'est pas compatible avec le plus grand nombre possible de cycles enfants.

Le document US6983947 décrit une autre barre de traction dont le montage ne comprend pas de mâchoire, et cette barre est compatible avec une grande variété de géométries de cadres du cycle enfant au moyen d'une platine de montage universelle. Toutefois, la barre présente l'inconvénient majeur que son montage sur le cycle enfant doit être finement ajusté : en effet, si la platine n'est pas correctement orientée par rapport au cycle enfant, ce dernier est incliné par rapport à la barre de traction et donc par rapport à la trajectoire suivie. L'enfant est déséquilibré, ce qui peut entraîner sa chute.

Enfin, lorsque ces barres de tractions sont détachées du cycle enfant, elles ne sont pas maintenues en position de sorte qu'elles basculent sur un côté ou l'autre du cycle adulte et peuvent soit déséquilibrer l'adulte, soit dépasser du gabarit attendu du cycle et être accidentogènes.

Les documents US6286847, US5842710, GB2296903, FR603834, US0610244 et US0625944 décrivent d'autres dispositifs destinés à fixer des accessoires pour cycles, mais qui présentent également tout ou partie des inconvénients susmentionnés.

Le document FR2775242 décrit un système d'attelage de chiens sur cadre avant de vélo ou vélo tout terrain.

Ce dispositif vise à atteindre un but différent de celui de l'invention. Au surplus, la compatibilité du système décrit par ce document est limitée à une gamme de diamètres de douilles de cycles qui est restreinte. La partie de la surface de la douille qui est en contact avec la garniture est de superficie limitée.

### Exposé de l'invention

L'un des buts de l'invention est de pallier les problèmes de l'art antérieur, en particulier en proposant un dispositif de fixation d'une barre de traction ou d'un accessoire pour cycle qui puisse être monté de façon simple sur le plus grand nombre de cycles possibles, quelles que soient leurs géométries.

À cet effet, il a été mis au point un dispositif de fixation d'accessoires pour cycle comprenant un cadre et une douille de direction, le dispositif comprenant un boîtier ouvert comprenant un fond se prolongeant de part et d'autre par deux faces opposées, l'ensemble formant un U ;
- le dispositif comprenant des premiers moyens de serrage destinés à rapprocher les faces opposées l'une de l'autre ;
- le boîtier étant configuré pour être monté sur le cycle par l'avant de celui-ci et pincer entre ses faces opposées la douille de direction ainsi qu'une portion du cadre ;
- le boîtier comprenant en outre des moyens de fixation d'un accessoire pour cycle.

Selon l'invention, le dispositif comprend une garniture disposée à l'intérieur du boîtier et configurée pour venir en contact de toute ou partie avec la partie de la douille de direction et la portion du cadre du cycle en regard de la garniture lors du serrage des premiers moyens de serrage.

De cette manière, l'invention permet de pallier les différents problèmes précités :
- la garniture permet de recevoir la douille de direction et une portion du cadre du cycle enfant quelles que soient leurs géométries ;
- les efforts de serrage des faces latérales du boîtier contre les parties antagonistes du cycle enfant sont répartis sur toute la superficie de la garniture en contact avec ces dites parties, de sorte que le cycle enfant n'est pas détérioré par le serrage ;
- l'utilisation d'une garniture plutôt qu'une pièce métallique permet de protéger le cadre du cycle enfant, et en particulier la peinture ;
- les efforts de serrage obtenus par les premiers moyens de serrage peuvent être suffisants pour garantir la bonne fixation du dispositif sur le cycle enfant ;
- le boîtier pinçant entre ses faces opposées une portion du cadre du cycle enfant, le dispositif est nécessairement aligné avec le cycle enfant.

Selon un mode de réalisation particulier, la garniture est mobile par rapport au boitier selon un axe longitudinal, perpendiculaire au fond du boitier, et la garniture comprend deux branches reliées par une articulation pivot dont l'axe est parallèle au fond du boîtier et aux faces opposées. Ainsi, il est possible de faire glisser la garniture hors du boîtier et d'écarter ses deux branches pour y insérer le cycle enfant, jusqu'à ce que la douille du cycle enfant vienne en contact avec le fond de la garniture. La plus grande partie de la surface de la douille du cycle enfant est donc en contact avec la garniture. Dans les cas où la section de la douille présente des dimensions supérieures à celles de la section du cadre, cette articulation de la garniture lui permet également, lors de son montage sur le cycle enfant, de passer par-dessus la douille et de venir épouser le cadre sans difficultés. Le dispositif obtenu est donc compatible avec un plus grand nombre de géométries de douilles que les solutions de l'art antérieur.
La garniture et la douille sont ensuite réintroduites à l'intérieur du boîtier en vue du serrage et de la fixation de l'ensemble.

Dans le mode de réalisation préféré, la garniture est en deux parties symétriques, et l'articulation pivot correspond à un emboîtement de formes complémentaires de chacune des parties. Cette conception permet de réduire les coûts de fabrication puisqu'un seul moule est nécessaire pour fabriquer les différentes pièces de la garniture. Au surplus, l'articulation pivot obtenue est simple à mettre en œuvre.

La garniture est réalisée en matériau plastique, tel que du polypropylène, du polyoxométhylène ou du polystyrène, de sorte que la dégradation du cycle enfant lors du montage est évitée de façon certaine.

Afin d'obtenir une conception simple mais garantissant un effort de serrage suffisant et correctement réparti, les premiers moyens de serrage sont deux boulons traversant le boîtier de part en part, à travers deux orifices ménagés aux extrémités libres des faces opposées du boîtier.

Pour sécuriser encore plus le montage du dispositif sur le cycle enfant, le dispositif comprend deux bagues de serrage munies d'orifices taraudés. Les bagues sont disposées à l'opposé du fond et sont reliées à celui-ci par des seconds moyens de serrage, venant ainsi serrer la douille contre le fond du boîtier. Ces bagues et seconds moyens de serrage peuvent également servir à faciliter la réintroduction de la garniture et de la douille au sein du boîtier.

L'invention concerne également une barre de traction configurée pour atteler un cycle enfant derrière un cycle adulte, comprenant un timon pourvu d'une liaison rotule, des moyens de fixation du timon sur le cycle adulte, des moyens de fixation amovibles du timon sur le cycle enfant, et des moyens de blocage de la direction du cycle enfant, les moyens de fixation du timon sur le cycle enfant se présentant sous la forme du dispositif ayant les caractéristiques techniques précitées. La fixation de la barre de traction est particulièrement aisée, et l'alignement du timon avec le cycle tracté est garanti.

Avantageusement, les moyens de blocage de la direction du cycle enfant se présentent sous la forme d'une fourche munie de deux branches latérales montée sur le timon, destinée à recevoir librement la roue du cycle enfant entre ses branches, et à bloquer la roue par appui latéral contre lesdites branches. L'installation des moyens de blocage se fait donc sans outils, et ne nécessite pas de rajouter des pièces de liaison sur le cycle enfant, par exemple sur la fourche ou sur le moyeu de la roue avant.

Au surplus, la fourche est montée sur le timon avec une liaison pivot d'axe transversal par rapport à l'axe du timon et la fourche est mobile entre une position verticale lui permettant de recevoir la roue du cycle enfant, et une position horizontale selon laquelle une partie supérieure de la fourche recouvre l'extrémité libre du timon lorsque les moyens de fixation du cycle enfant sont détachés. De cette manière, des crochets ou des éléments saillants que peuvent comporter les moyens de fixations du cycle enfant sont couverts, ce qui limite le risque de blessure.

De préférence, le timon comprend un tube intérieur, muni de la liaison rotule, et monté dans un tube extérieur avec capacité de coulissement entre une position déployée et une position repliée. En position repliée, le tube extérieur vient coiffer la liaison rotule afin de la verrouiller. Ainsi, lorsque la barre de traction est décrochée du cycle enfant, elle peut être repliée et maintenue en position derrière le cycle adulte, sans nécessiter de pièces de fixation supplémentaires.

L'invention concerne également l'utilisation d'un dispositif selon les caractéristiques techniques précitées, pour fixer un accessoire sur un cycle comprenant un cadre et une douille de direction.

### Brève description des dessins

[Fig.1] est une vue en perspective, vue de dessus, d'un dispositif selon l'invention.
[Fig.2] est une vue partielle en perspective, d'un tel dispositif.
[Fig.3] est une vue en perspective, d'une partie de la garniture du dispositif des figures 1 et 2.
[Fig.4] est une vue de détail, en perspective, de la garniture.
[Fig.5] est un schéma de principe, vu de dessus, du dispositif dans une position ouverte.
[Fig.6] est un schéma de principe, vu de dessus, du dispositif dans une position fermée, monté sur un cycle.
[Fig.7] est un schéma de principe, vu de face, du dispositif monté sur un premier cycle.
[Fig.8] est un schéma de principe, vu de face, du dispositif monté sur un deuxième cycle.
[Fig.9] est un schéma de principe, vu de face, du dispositif monté sur un troisième cycle.
[Fig.10] est une vue de face d'une barre de traction selon l'invention, dans une position déployée.
[Fig.11] est une vue de face d'une telle barre de traction, dans une position repliée.
[Fig.12] est un schéma de principe, en perspective, d'une telle barre de traction montée sur un cycle.

### Description détaillée de l'invention

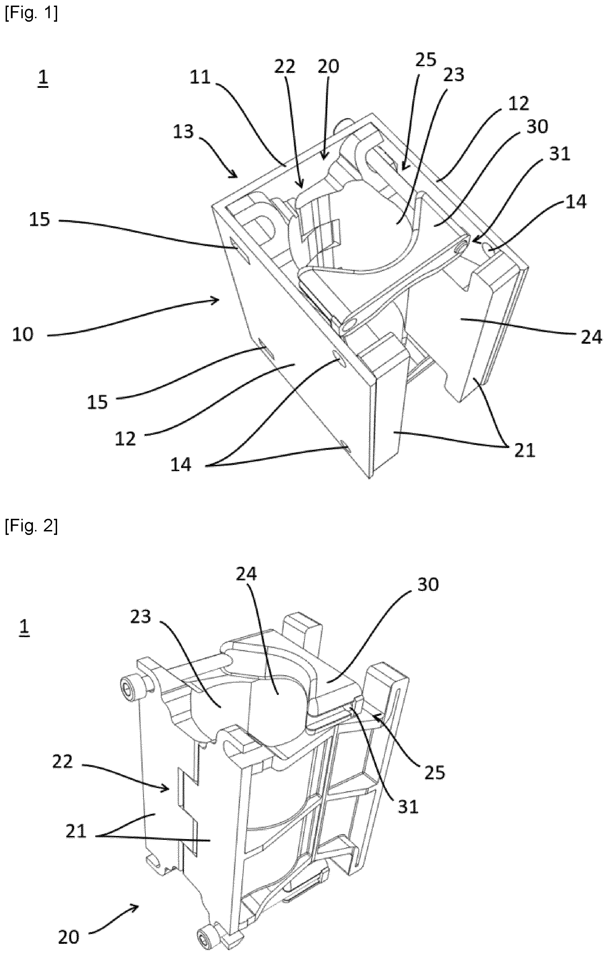

En référence aux figures 1 à 9, l'invention concerne un dispositif (1) destiné à être fixé sur un cycle (3), et en particulier sur un cycle (3) d'enfant, c'est-à-dire de taille adaptée à la morphologie d'un enfant et présentant des roues de diamètre généralement inférieures ou égales à 20 pouces.

Le dispositif (1) se monte sur le cycle (3) au niveau d'une douille de direction (3b). Le dispositif (1) comporte à cet effet un boîtier (10) en forme de U dont des faces latérales (12) viennent enserrer la douille (3b) ainsi qu'une portion du cadre (3a) du cycle (3). Le fait de positionner le boîtier (10) à la fois sur la douille (3b) et le cadre (3a) permet de garantir le bon alignement du dispositif (1) avec le cycle (3).

Afin de ne pas détériorer le cycle (3), en particulier sa peinture ou son vernis, une garniture (20) est disposée à l'intérieur du boitier (10). Cette garniture (20) est réalisée en tout matériau adapté, mais il s'agit de préférence d'un matériau plastique, et encore préférentiellement d'un matériau plastique dur, tel que du polypropylène, du polyoxométhylène ou du polystyrène.

La fixation du dispositif (1) sur le cycle (3) est garantie par deux caractéristiques. Tout d'abord, des premiers moyens de serrage, de préférence des boulons, enserrent les faces latérales (12) du boîtier (10), afin de pincer les faces latérales (12) et la garniture (20) sur la douille (3b) et la portion de cadre (3a). A cet effet, les faces latérales (12) présentent à leurs extrémités libres des orifices (14), de préférence deux orifices (14). Afin d'alléger les figures, ces premiers moyens de serrage ne sont pas représentés.

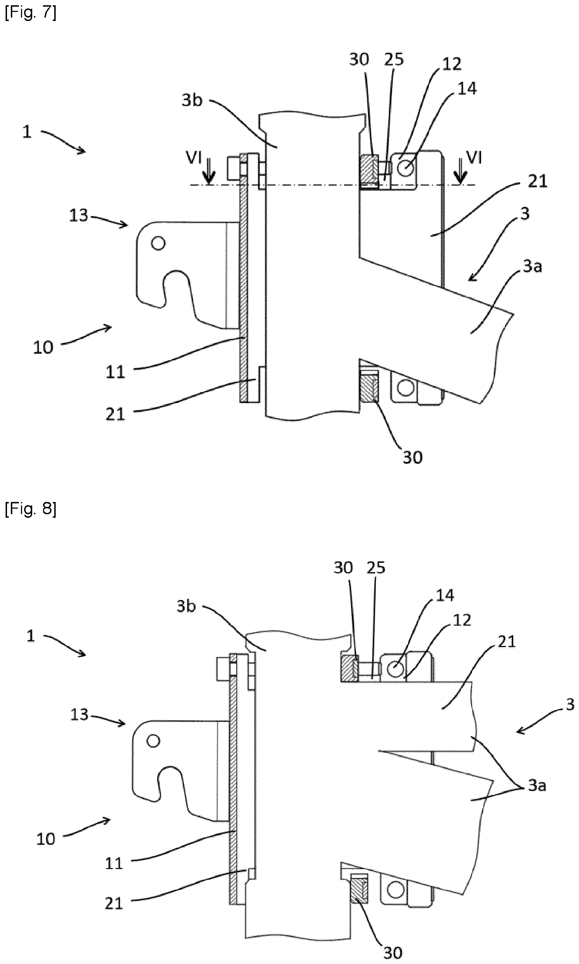

Comme illustré figures 7 à 9, la hauteur des faces latérales (12) et le positionnement des orifices (14) sont tels qu'il est possible de positionner les premiers moyens de serrage dans les orifices (14) quelle que soit la géométrie du cadre du cycle (3), ou à tout le moins pour la majorité des cycles (3) connus sur le marché :
- la figure 7 illustre le dispositif (1) monté sur un cycle (3) avec un cadre de géométrie type « col de cygne », avec un tube de cadre oblique, et pas de tube horizontal ;
- la figure 8 illustre le dispositif (1) monté sur un cycle (3) avec un cadre de géométrie type « homme », avec un tube de cadre oblique, et un tube horizontal ;

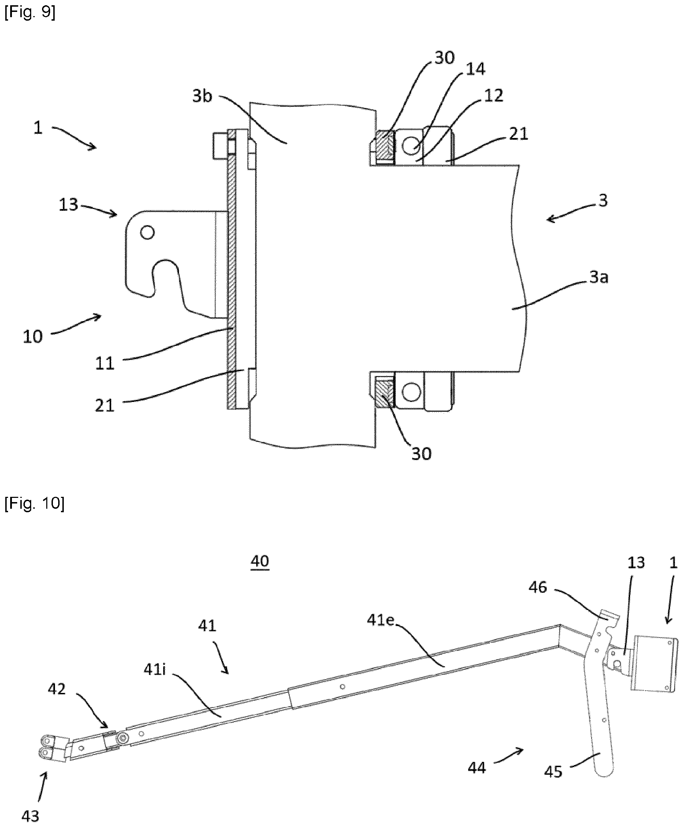

- la figure 9 illustre le dispositif (1) monté sur un cycle (3) avec un cadre de géométrie type « draisienne », avec un seul tube de cadre horizontal, de hauteur importante, et pas de tube oblique.

La fixation du dispositif (1) sur le cycle (3) est également assurée par deux bagues de serrage (30), disposées du côté opposé au fond (11) du boîtier (10). Ces bagues (30) comportent des orifices taraudés (31) dans lesquels s'insèrent des vis.

Les vis traversent le boîtier (10) par des orifices disposés en haut et en bas du fond (11). Le serrage de ces vis vient plaquer les bagues (30 contre la douille (3a), la maintenant ainsi contre la garniture (20), dans le fond du U que forme le boîtier (10). Une seule vis par bague (30) est représentée sur les figures.

Dans le mode de réalisation préféré illustré, les bagues (30) sont en deux parties : une première partie réalisée dans le même matériau que celui de la garniture (20), et qui n'abîme par la douille (3b) avec laquelle elle est en contact, et une deuxième partie réalisée en métal de façon à présenter les caractéristiques mécaniques suffisantes pour pouvoir supporter les efforts de serrage exercés par les seconds moyens de serrage.

Toujours dans une optique de polyvalence avec le plus grand nombre possible de cycles (3), le dispositif (1) est prévu pour s'adapter à différents diamètres de douilles (3a), par exemple compris entre 1" et 1"1/8 ou entre 1" et 1"1/5. A cet effet, la garniture (20) est articulée selon un axe parallèle au fond du boîtier (10) et aux faces opposées (12). La garniture (20) est ainsi capable de s'écarter ou de se refermer sur une douille (3b) de diamètre plus ou moins grand.

Dans le mode de réalisation préféré illustré, la garniture (20) comprend deux parties (21) symétriques, qui présentent des formes complémentaires (22) dont l'emboîtement réalise l'articulation cherchée. On peut également imaginer que la garniture (20) soit réalisée en un matériau souple, tel qu'une gomme ou un élastomère, de sorte que l'articulation entre les deux branches de la garniture (20) pourrait être obtenu par un amincissement de la garniture (20) au niveau de la liaison entre les mâchoires.

Chaque partie (21) présente une première portion de forme hémicylindrique (23) destinée à venir en contact avec la douille (3b), et une seconde portion de forme plane (24) destinée à venir en contact avec le cadre (3a).

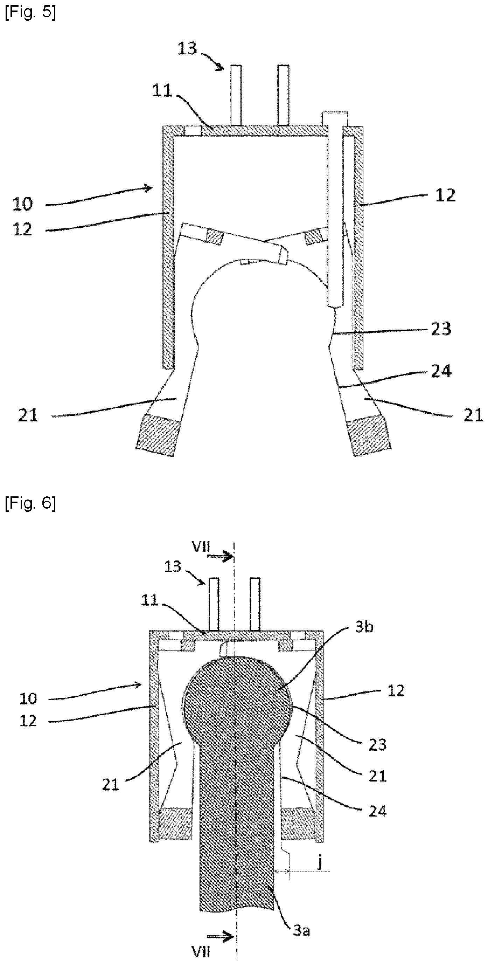

Comme illustré figure 6, en fonction du diamètre de la douille (3b) et de la section des tubes du cadre (3a), lorsqu'on positionne la garniture (20) sur le cycle (3), il peut rester un jeu (j) entre le cadre (3a) et la portion de surface plane (24). Le serrage des premiers moyens de serrage va alors déformer les faces latérales (12) et rapprocher les parties (21) au moyen de l'articulation de la garniture (20) jusqu'à ce que les portions de surface plane (24) serrent correctement le cadre (3a).

Afin de pouvoir être déformé, le boîtier (10) est réalisé avec un matériau et des épaisseurs adaptés, par exemple une tôle d'acier d'épaisseur comprise entre 1 et 5 mm, et de préférence 3mm. La déformation est élastique, c'est-à-dire que le boîtier (10) reprend sa forme initiale lorsqu'on le démonte.

A l'inverse, si la section des tubes du cadre (3a) est plus importante que le diamètre de la douille (3b), il faut écarter les faces latérales (12) lorsqu'on monte le dispositif (1). Afin de faciliter cette opération, il est possible de faire coulisser la garniture (20) pour la sortir du boîtier (10), tel que représenté figure 5. Les mâchoires de la garniture (20) sont alors ouvertes, ce qui permet d'insérer le cycle (3) dans la position voulue. L'ensemble est ensuite repoussé à l'intérieur du boîtier (10), éventuellement avec l'aide des seconds moyens de serrage et des bagues (30) pour venir plaquer la douille (3b) et la garniture (20) contre le fond (11) du boitier (10).

Afin de recevoir un accessoire pour cycles, le dispositif (1) présente des moyens de fixation (13). Ces moyens peuvent être de différents type et sont dans le mode de réalisation préféré illustré une paire de crochets, dont la forme en creux est apte à coopérer avec des formes complémentaires de l'accessoire, telle qu'une paire de tenons.

Pour guider les bagues (30) en translation au sein du dispositif (1), elles sont disposées dans des rainures constituées par des évidements (25) de la garniture (20) et les faces latérales (12). Ces guidages permettent aux bagues (30) de ne pas s'arc-bouter lors de la manipulation des seconds moyens de serrage.

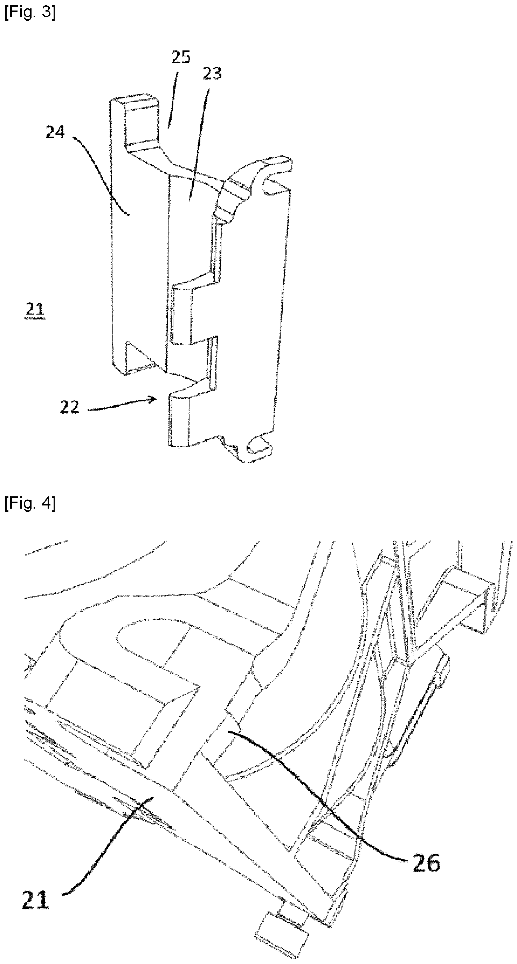

Pour faciliter la manipulation du dispositif (1) avant son montage sur le cycle (3), la garniture (20) présente des excroissances (26) illustrées figure 4, qui viennent se loger dans des orifices (15) du boîtier (10), illustrés figure 1. Ces excroissances retiennent la garniture (20) au sein du boîtier (10) et évitent sa chute.

En référence aux figures 10 à 12, l'accessoire pour cycles qui est porté par le dispositif (1) est une barre de traction (40). Celle-ci comprend un timon (41) pourvu d'une liaison rotule (42), des moyens de fixation (43) du timon (41) sur le cycle adulte, des moyens de fixation amovibles du timon (41) sur le cycle enfant (3), et des moyens de blocage (44) de la direction du cycle enfant (3).

Les moyens de blocage (44) sont de préférence une fourche (44) munie de deux branches latérales (45) destinées à venir encadrer la roue avant du cycle (3), bloquant ainsi sa direction. Les points de contact entre les branches latérales (45) et la roue avant (3) sont en effet désaxés par rapport à la douille (3b). Les branches latérales (45) viennent librement au contact de la roue avant du cycle (3), c'est-à-dire qu'il n'y a pas de moyens de fixation entre elles.

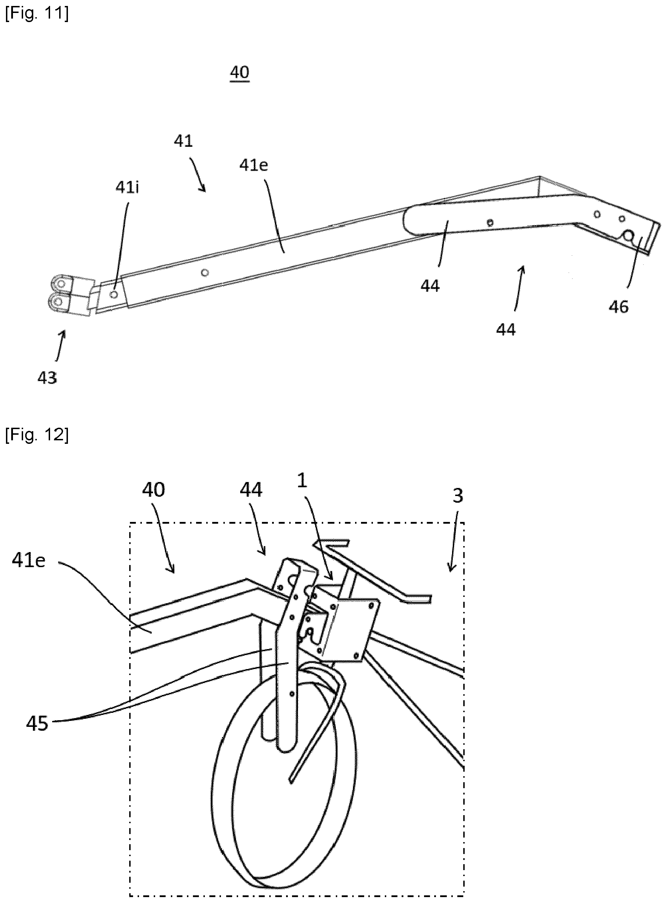

Avantageusement, la fourche (44) est montée pivotant sur le timon (41), de sorte que lorsqu'on détache le cycle (3), il est possible de dissimuler les moyens de fixation (13) en faisant basculer la fourche (44) de sa position verticale vers une position horizontale. Dans cette position illustrée figure 11, une partie supérieure (46) de la fourche (44) vient recouvrir lesdits moyens de fixation du cycle (3).

Le maintien en position de la fourche (44) en position verticale ou horizontale peut se faire selon tout moyen adapté. Le maintien en position verticale de la fourche (44) peut également être simplement assuré par gravité : les branches latérales (45) étant plus lourdes que la partie supérieure (46), la fourche (44) tend naturellement à rester en position verticale.

Sur cette même figure 11, on voit également que la barre de traction (40) peut être repliée dans une position de rangement. Pour cela, le timon (41) comprend un tube interne (41i) qui pénètre dans un tube externe (41e) de façon à ce que les deux tubes (41i, 41e) soient télescopiques.

Il est remarquable qu'en position de rangement, le tube extérieur (41e) vient coiffer la liaison rotule (42) de sorte que celle-ci est immobilisée. Ce faisant, il n'est pas nécessaire de prévoir d'autres pièces de fixation ou d'autres éléments pour maintenir la barre de traction (40) en position sur le cycle adulte, lorsque le cycle (3) tracté est décroché.

Par ailleurs, le dispositif (1) et la barre de traction (40) peuvent être conformés différemment des figures sans sortir du cadre de l'invention, qui est défini par les revendications.

En variante non représentée, l'accessoire porté par le dispositif (1) est un phare, ou un panier.

Selon un autre mode non représenté, le dispositif (1) est conçu pour être monté sur un cycle (3) de taille adulte.

En outre, les caractéristiques techniques des différents modes de réalisation et variantes mentionnés ci-dessus peuvent être, en totalité ou pour certaines d'entre elles, combinées entre elles. Ainsi, le dispositif (1) et la barre de traction (40) peuvent être adaptés en termes de coût, de fonctionnalités et de performance.

## Revendications

1. Dispositif de fixation (1) d'accessoires pour cycle (3) comprenant un cadre (3a) et une douille de direction (3b), le dispositif (1) comprenant un boîtier (10) ouvert comprenant un fond (11) se prolongeant de part et d'autre par deux faces opposées (12), l'ensemble formant un U ;
- le dispositif (1) comprenant des premiers moyens de serrage destinés à rapprocher les faces opposées (12) l'une de l'autre ;
- le boîtier (10) étant configuré pour être monté sur le cycle (3) par l'avant de celui-ci et pincer entre ses faces opposées (12) la douille de direction (3b) ainsi qu'une portion du cadre (3a) ;
- le boîtier (10) comprenant en outre des moyens de fixation (13) d'un accessoire pour cycle ;
***caractérisé en* ce *que*** le dispositif (1) comprend une garniture (20) disposée à l'intérieur du boîtier (10) et configurée pour venir en contact de toute ou partie avec la partie de la douille de direction (3b) et la portion du cadre (3a) du cycle (3) en regard de la garniture (20) lors du serrage des premiers moyens de serrage, ***et en ce que*** la garniture (20) est mobile selon un axe longitudinal, perpendiculaire au fond du boitier (10), et **en ce que** la garniture (20) comprend deux branches reliées par une articulation pivot dont l'axe est parallèle au fond du boîtier (10) et aux faces opposées (12).

2. Dispositif (1) selon la revendication 1, ***caractérisé* en ce que** la garniture (20) est en deux parties (21) symétriques, et l'articulation pivot correspond à un emboîtement de formes complémentaires (22) de chacune des parties (21).

3. Dispositif (1) selon la revendication 2, ***caractérisé* en ce que** la garniture (20) est réalisée en matériau plastique, tel que du polypropylène, du polyoxométhylène ou du polystyrène.

4. Dispositif (1) selon la revendication 1, ***caractérisé* en ce que** les premiers moyens de serrage sont deux boulons traversant le boîtier (10) de part en part au moyen de deux orifices (14) ménagés aux extrémités libres des faces opposées (12) du boîtier (10).

5. Dispositif (1) selon la revendication 1, ***caractérisé* en ce qu'**il comprend deux bagues (30) de serrage munies d'orifices taraudés (31), les bagues (30) sont disposées à l'opposé du fond (11) et sont reliées à celui-ci par des seconds moyens de serrage.

6. Barre de traction (40) configurée pour atteler un cycle enfant (3) derrière un cycle adulte, comprenant un timon (41) pourvu d'une liaison rotule (42), des moyens de fixation (43) du timon (41) sur le cycle adulte, des moyens de fixation amovibles du timon (41) sur le cycle enfant (3), et des moyens de blocage (44) de la direction du cycle enfant (3), ***caractérisée* en ce que** les moyens de fixation du timon sur le cycle enfant (3) se présentent sous la forme du dispositif (1) selon l'une des revendications précédentes.

7. Barre de traction (40) selon la revendication 6, ***caractérisée* en ce que** les moyens de blocage (44) de la direction du cycle enfant (3) se présentent sous la forme d'une fourche munie de deux branches latérales (45) montée sur le timon (41), destinée à recevoir librement la roue du cycle enfant (3) entre ses branches (45), et à bloquer la roue par appui latéral contre lesdites branches (45).

8. Barre de traction (40) selon la revendication 7, ***caractérisée* en ce que** la fourche (44) est montée sur le timon (41) avec une liaison pivot d'axe transversal par rapport à l'axe du timon (41) et **en ce que** la fourche (44) est mobile entre une position verticale lui permettant de recevoir la roue du cycle enfant (3), et une position horizontale selon laquelle une partie supérieure (46) de la fourche (44) recouvre l'extrémité libre du timon (41) lorsque les moyens de fixation du cycle enfant sont détachés.

9. Barre de traction (40) selon la revendication 7, ***caractérisée* en ce que** le timon (41) comprend un tube intérieur (41i), muni de la liaison rotule (42), et monté dans un tube extérieur (41e) avec capacité de coulissement entre une position déployée et une position repliée, et **en ce qu'**en position repliée le tube extérieur (41e) vient coiffer la liaison rotule (42) afin de la verrouiller.

10. Utilisation d'un dispositif (1) selon l'une des revendications 1 à 5 pour fixer un accessoire sur un cycle (3) comprenant un cadre (3a) et une douille de direction (3b).
